# EUROPEAN PATENT SPECIFICATION

(11) **EP 2 474 939 B1**
(45) Date of publication and mention of the grant of the patent: **20.07.2016**
(21) Application number: 11808128.0
(22) Date of filing: 17.03.2011
(51) Int. Cl.: G06K 19/07, G06K 17/00, H04B 1/59, H04B 5/02, H04B 7/10, G06K 7/10, H04B 7/06

(54) **RFID SYSTEM**
RFID-SYSTEM
SYSTÈME RFID

(30) Priority: 15.09.2010 JP 2010207033
(43) Date of publication of application: 11.07.2012
(73) Proprietor: Omron Corporation, Kyoto-shi, Kyoto 600-8530 (JP)
(72) Inventor: MATSUI, Shuichi, Kyoto 600-8530 (JP); KASAI, Hirokazu, Kyoto 600-8530 (JP); YAMASAKI, Kazushi, Kyoto 600-8530 (JP); OKUNO, Yoshito, Kyoto 600-8530 (JP); NOGAMI, Hidekatsu, Kyoto 600-8530 (JP); YOSHIDA, Tatsuo, Kyoto 600-8530 (JP)
(74) Representative: Horn Kleimann Waitzhofer Patentanwälte PartG mbB
(86) International application number: PCT/JP2011/056433
(87) International publication number: WO 2012/035805

(56) References cited:
- DE-A1-102006 009 802
- JP-A- 2002 076 768
- JP-A- 2006 295 538
- JP-A- 2009 095 680
- JP-A- 2009 265 993
- US-A- 6 150 986
- US-A1- 2005 242 959
- US-A1- 2007 152 831
- US-A1- 2009 117 872

## Description

### TECHNICAL FIELD

The present invention relates to an RFID system including an RFID tag that includes an antenna and an IC chip and a reader/writer communicating with the RFID tag for reading/writing information from and in a memory of the IC chip, and the RFID tag used in the RFID system.

### BACKGROUND ART

In a site to which the RFID system is introduced, sometimes a range where communication can be conducted with the RFID tag (hereinafter simply referred to as a "tag") attached to an article is restricted, or sometimes it is necessary to recognize a movement direction of the tag (article).

Conventionally a proposal, in which an antenna unit of the reader/writer is constructed by an array antenna to detect the movement direction of the tag or to adjust a directive characteristic of an emitted radio wave, is made in order to meet the demand System claim 1 is delimited against US-A-2005/242959.

### DISCLOSURE OF THE INVENTION

### PROBLEMS TO BE SOLVED BY THE INVENTION

A method for changing the directive characteristic of the radio wave emitted from the antenna unit is well known as a general method for adjusting the range where the communication can be conducted with the RFID tag. However, the method is hardly adopted due to a restriction of Radio Act.

In the case that the array antenna is introduced to the reader/writer, sometimes each antenna constituting the array antenna conducts communication with the RFID tag to perform a calculation using signals received by the antennas. In such pieces of processing, a load of the calculation is increased in the reader/writer, and speed enhancement of the read/write processing is hardly achieved.

In view of the above problems, an object of the present invention is to easily implement the adjustment of the communicable range or the communication following the movement of the tag.

### MEANS FOR SOLVING THE PROBLEM

The invention is set out in claim 1.

An RFID tag according to the present invention includes a function of setting a plurality of communication ranges expanding in relatively different directions when viewed from a surface to face the reader/writer, and a function of returning, through a communication range in which a command from the reader/writer has been received, response information corresponding to the command to the reader/writer. On the other hand, the reader/writer selects at least one of the plurality of communication ranges, activates communication through the selected communication range and deactivates communication through a non-selected communication range, among communications with the RFID tag.

According to the RFID system including the RFID tag and the reader/writer, the communication can be conducted in order to perform the read/write processing through the communication range, which can receive the radio wave from the reader/writer and selected by the reader/writer, in the plurality of communication ranges set by the RFID tag.

In the reader/writer, the range where the communication can be conducted with the tag can be changed by selecting the communication ranges. In the case that the communication is conducted with a moving tag, the communication following the movement of the tag can be conducted by properly switching the selection of the communication ranges while the reception of response information from the tag through the currently-selected communication range is checked. Only when the plurality of communication ranges are simultaneously selected to be able to conduct communication through both the communication ranges, the communication range can be restricted by activating the communication. When the communication can be conducted through at least one of the plurality of communication ranges, the communication can be conducted in a wide range by activating the communication.

In an RFID system of a first embodiment of the present invention, a plurality of antennas adjusted to emit radio waves in directions different from each other, and an IC chip including a control circuit for operating these antennas independent from each other are provided; and the reader/writer transmits a command including identification information of a communication range selected by itself; and the control circuit of the IC chip executes the command from the reader/writer on condition that the command is received through an antenna matching the identification information in the command, and returns response information from the antenna that received the command.

According to the above configuration, the RFID tag has a possibility of receiving the command from the reader/writer through at least the two communication ranges. However, because the RFID tag reacts to the command only when receiving the command through the communication range selected by the reader/writer, there is no risk of performing the false processing by the command received through the communication range that is not selected. Therefore, accuracy of the read/write processing can be ensured.

An RFID tag according to a second embodiment is adapted to select any one of the plurality of communication ranges and activate only the selected communication range.

The reader/writer transmits, when switching of communication range selection becomes necessary, a command instructing the switching to the RFID tag.

According to the above configuration, the RFID tag can receive the radio wave from the reader/writer, and the communication can be started when the selections of the communication ranges of the RFID tag and the reader/writer are matched with each other. Then, even if the necessity to switch the communication range selection is generated, the communication range selection on the tag side can be switched by the command from the reader/writer similarly to the reader/writer, so that communication can be continued with no trouble.

An RFID tag according to a third embodiment is also adapted to select any one of the plurality of communication ranges and activate only the selected communication range.

The reader/writer of the third embodiment transmits a command including identification information of a communication range selected by itself. Further, the RFID tag, receiving the command including the identification information of the selected communication range from the reader/writer, executes the command and returns response information corresponding to the command to the reader/writer, and receiving a command including identification information of a communication range other than the selected communication range from the reader/writer, the RFID tag does not return the response information but switches selection to the communication range corresponding to the identification information included in the received command.

According to the above configuration, the RFID tag executes the command and returns the response information to the reader/writer, only when the communication range selected by the RFID tag is matched with the communication range selected by the reader/writer, and only when the command can be received from the reader/writer through the communication range. In the case that the RFID tag selects the communication range that is not matched with the identification information in the command, the RFID tag does not respond to the command, but switches the selection to the communication range corresponding to the identification information in the received command. Therefore, the RFID tag can execute the command and return the response information by retransmitting the command from the reader/writer.

The communication can be conducted using only the communication range selected by the reader/writer through the processing, so that the read/write processing performed by the false communication can be prevented.

The RFID tag according to a fourth to a sixth embodiments is provided with a plurality of antennas having radio wave emission directions adjusted such that communication ranges are distributed along one width direction of a surface to face the reader/writer, and an IC chip including a control circuit operating these antennas independent from each other.

The RFID tag having the configuration can be attached to the moving article such that the direction in which the communication ranges are distributed corresponds to the movement direction. Therefore, in the fourth embodiment, the control circuit of the IC chip, receiving a command for detection from the reader/writer through at least one antenna, transmits response information including identification information of the communication range corresponding to the antenna, through the antenna that received the command. Further, the reader/writer transmits the command for detection with all of the plurality of communication ranges being in the selected state, and determines direction of movement of the tag based on the identification information included in the response information corresponding to the command.

According to the fourth embodiment, the reader/writer continuously transmits the detection command until receiving at least the initial response information, whereby the reader/writer can recognize the communication range corresponding to the antenna that initially receives the detection command from the reader/writer according to the movement of the tag. Therefore, the determination of the movement direction of the RFID tag can correctly be made based on the recognition result.

The reader/writer of the fifth embodiment selects at least two communication ranges arranged along the direction in which the communication ranges are distributed, and when, through at least one of the selected communication ranges, response information including identification information of the communication range is received corresponding to the transmitted command, activates the response information. Further, the control circuit of the IC chip, receiving a command from the reader/writer through at least one of the antennas corresponding to the communication ranges selected by the reader/writer, executes the command, and transmits response information including identification information of the corresponding communication range, through the antenna that received the command.

The reader/writer of the sixth embodiment selects at least two communication ranges arranged adjacent to each other along the direction in which the communication ranges are distributed, and when, from each of the selected communication ranges, response information including identification information of the range is received corresponding to the transmitted command and contents of these pieces of response information match, activates these pieces of response information. Further, when a command from the reader/writer is received from all antennas corresponding to the communication ranges selected by the reader/writer, the control circuit of the IC chip executes the command, and transmits, through all the antennas that received the command, response information including identification information of the communication range corresponding to each of the antennas.

The fifth embodiment can be adopted when the range where the communication can be conducted with the tag is widely set. On the other hand, the sixth embodiment can be adopted in the case that the range where the communication can be conducted with the tag is reduced rather than the case that the one communication range is selected.

### EFFECT OF THE INVENTION

According to the present invention, by selecting the communication range that is used to perform the read/write processing from the plurality of communication ranges on the RFID tag side, the position or the width of the communicable range can be adjusted, or the range can be changed while following the movement of the RFID tag. The processing of the reader/writer does not become complicated, so that the communication can stably be conducted even if the RFID tag moves at high speed or even if the number of communication times is set a large value.

### BRIEF DESCRIPTION OF THE DRAWINGS

Fig. 1 is a block diagram illustrating a configuration of an RFID system.
Fig. 2 is a view illustrating a configuration of an RFID tag according to a first embodiment.
Fig. 3 is a view illustrating a configuration of an RFID tag according to a second embodiment.
Fig. 4 is a view illustrating a configuration of an RFID tag according to a third embodiment.
Fig. 5 is a view illustrating a configuration of an RFID tag according to a fourth embodiment.
Fig. 6 is a view illustrating a configuration of an RFID tag according to a fifth embodiment.
Fig. 7 is a view illustrating a configuration of an RFID tag according to a sixth embodiment.
Fig. 8 is a view illustrating a configuration of an RFID tag according to a seventh embodiment.
Fig. 9 is a view illustrating an example of communication processing.
Fig. 10 is a flowchart illustrating a processing procedure of a reader/writer when the communication processing of Fig. 9 is performed.
Fig. 11 is a flowchart illustrating another example of the processing procedure of the reader/writer when the communication processing of Fig. 9 is performed.
Fig. 12 is a view illustrating another example of the communication processing.
Fig. 13 is a flowchart illustrating the processing procedure of the reader/writer when the communication processing of Fig. 12 is performed.
Fig. 14 is a flowchart illustrating the processing procedure of the reader/writer when the communication processing is performed through a communication range B after a tag is detected by communication through a communication range A.
Fig. 15 is a view illustrating an example of communication control when both the communication ranges A and B are selected.
Fig. 16 is a view illustrating the communication processing for detecting a direction in which the RFID tag moves.

### BEST MODE FOR CARRYING OUT THE INVENTION

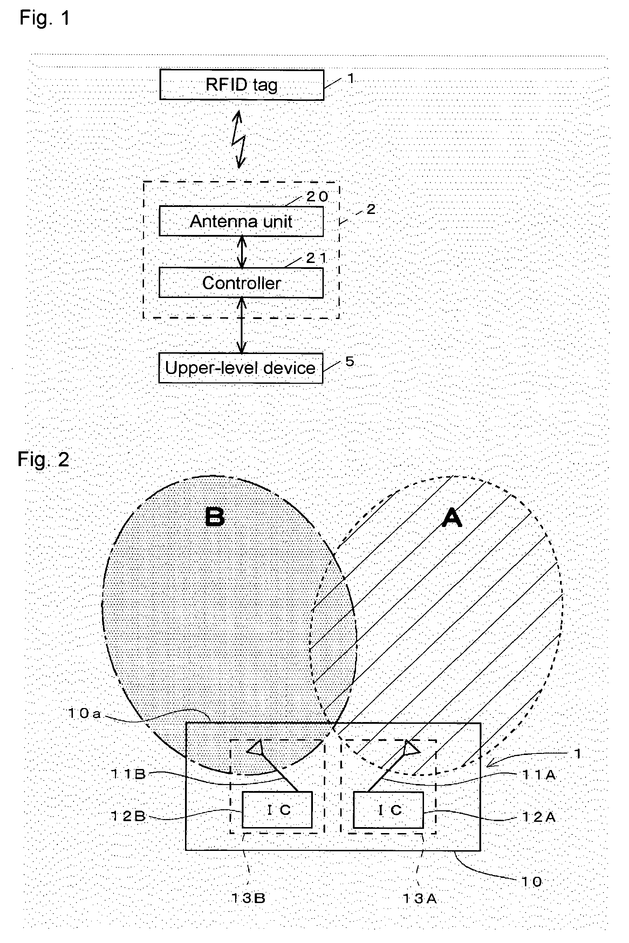

Fig. 1 illustrates a configuration of an RFID system to which the present invention is applied. The RFID system conducts a passive communication using a radio wave having a UHF band, and includes an RFID tag 1 attached to an article, a reader/writer 2 that performs read/write processing to the RFID tag 1, and an upper-level device 3 (such as a personal computer and a PLC). The reader/writer 2 is one in which an antenna unit 20 and a controller 21 are separated. Alternatively, a reader/writer in which an antenna unit and a controller are integrated may be used.

The controller 21 of the reader/writer 2 receives a command from the upper-level device 3, and transfers the command to the RFID tag 1 from the antenna unit 20. Response information, which is received by the antenna unit 20 from the RFID tag 1 that executes the command, is output from the antenna unit 20 to the controller 21, and further output from the controller 21 to the upper-level device.

Figs. 2 to 8 illustrate specific examples of the RFID tag 1 applied to the RFID system.

In each embodiment, the RFID tag 1 is designed such that two communication ranges A and B expanding in different directions are generated. In each of Figs. 2 to 8, a package that forms a main body of the tag 1 is designated by the numeral 10, and a front surface of the package 10 (a surface facing the antenna unit 20 of the reader/writer 2) is designated by the numeral 10a.

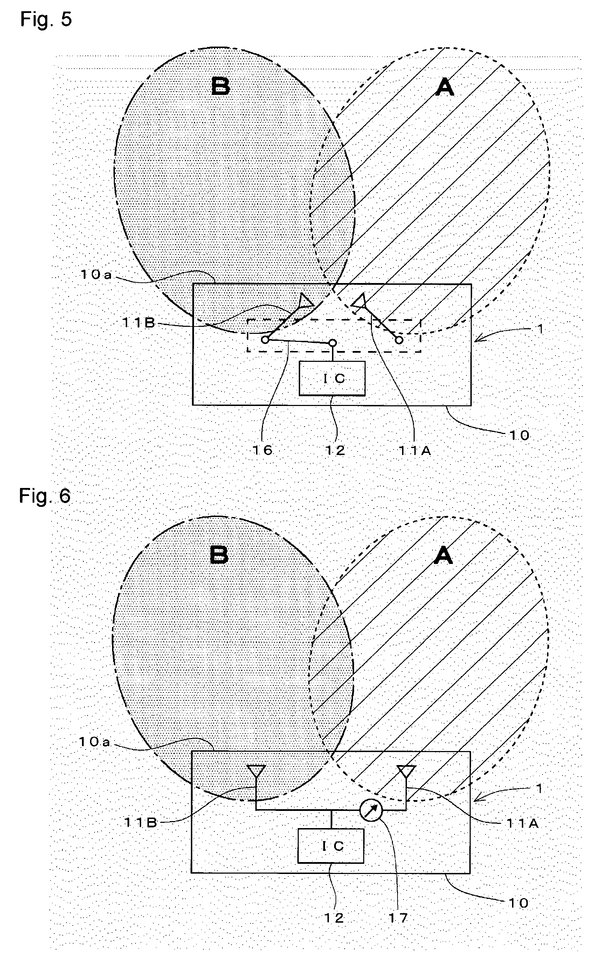

As used herein, the communication ranges A and B are a range in which a radio wave can be transmitted to the antenna unit 20. The communication ranges A and B are distributed along a horizontal width direction of the package 10 by setting a directive characteristic of the radio wave emitted from the tag 1. The tags 1 of the embodiments in Figs. 2 to 4 are a type that can simultaneously generate the communication ranges A and B, and the tags 1 of the embodiments in Figs. 5 to 8 are a type that can generate one of the communication ranges A and B.

Configurations of the RFID tags 1 of the embodiments will be described below with reference to Figs. 2 to 8.

In the RFID tag 1 illustrated in Fig. 2, two sets of processors 13 each of which includes an antenna 11 and an IC chip 12 are incorporated in the package 10. In Fig. 1, components of the processors 13 are distinguished from each other by symbols A and B.

The processors 13A and 13B are arranged along the horizontal width direction of the package 10 while the antennas 11 A and 11 B are oriented toward the front surface 10a of the package 10. Each of the IC chips 12A and 12B of the processors 13A and 13B includes a control circuit, which includes a CPU and a nonvolatile memory, and a transmitting/receiving circuit. Dispositions of the processors 13A and 13B and the antennas 11 A and 11 B are not limited to the embodiments, but the processors 13A and 13B and the antennas 11 A and 11 B may be disposed in various ways while a direction of the radio wave emitted from each of the antennas 11A and 11 B varies.

The antennas 11A and 11 B emit the radio waves toward different directions. In Figs. 2 to 8, the antenna 11A located on the right of the package 10 diagonally emits the radio wave toward the upper right direction, thereby setting the communication range A. The antenna 11 B located on the left of the package 10 diagonally emits the radio wave toward the upper left direction, thereby setting the communication range B. The antennas 11A and 11 B are set such that an overlapping portion having a predetermined area is generated between the communication ranges A and B. In the following embodiments, the same holds true for the relationship between the communication ranges A and B.

In the first embodiment, at least one of the antennas 11A and 11 B receives the radio wave from the antenna unit 20 of the reader/writer 2, and therefore the RFID tag 1 is started to be able to conduct communication with the antenna unit 20 through the antenna that receives the radio wave. At this point, as described later, the controller 21 of the reader/writer 2 selects one of the communication ranges A and B, and only the communication conducted through the selected communication range is activated. The same communication control is applied to the tags 1 of the following embodiments.

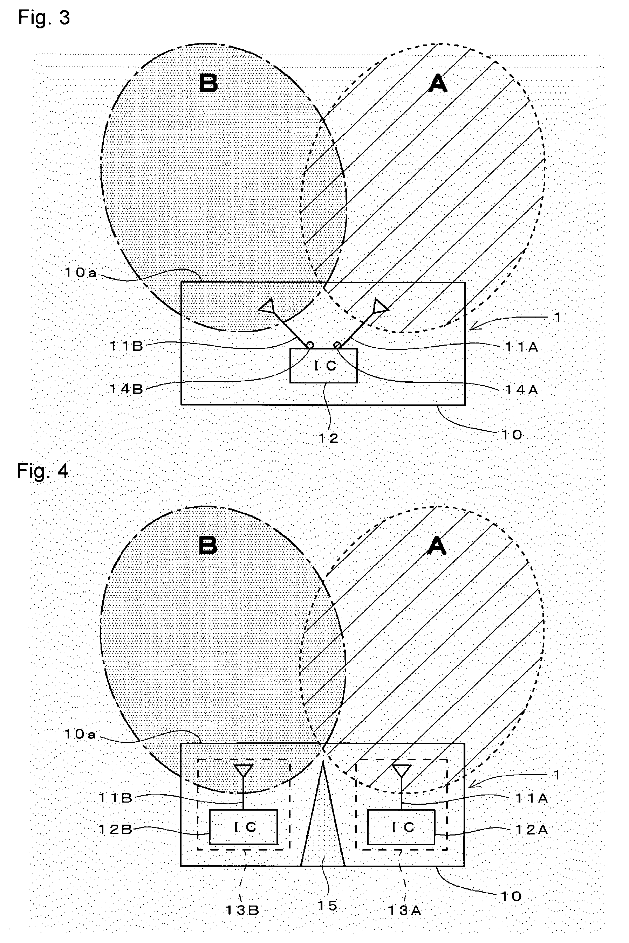

An RFID tag 1 of a second embodiment illustrated in Fig. 3 includes the two antennas 11A and 11 B similarly to the first embodiment of Fig. 2 while including only one IC chip 12. Connection terminals 14A and 14B are provided in the IC chip 12 with respect to the antennas 11A and 11 B. Further, the transmitting/receiving circuit is provided in the IC chip 12 in each of signal lines from the connection terminals 14A and 14B. The transmitting/receiving circuit is connected to the CPU of the control circuit through an individual port. According to the configuration, the control circuit independently operates the antennas 11A and 11 B, and the control circuit can select the antenna that transmits response information corresponding to the command from the reader/writer 2 while individually processing the signals received by the antennas 11A and 11 B.

Similarly to the first embodiment of Fig. 2, the antennas 11A and 11B are adjusted so as to diagonally emit the radio waves toward the upper right and upper left directions, respectively. Therefore, the communication ranges A and B are set.

In an RFID tag 1 of a third embodiment illustrated in Fig. 4, the two processors 13 (13A and 13B) each of which includes the antenna 11 and the IC chip 12 are provided similarly to the first embodiment of Fig. 2, and a reflector 15 is introduced. The reflector 15 is a metallic body having a triangular prism shape, and the reflector 15 is disposed between the processors 13A and 13B while both side surfaces of the reflector 15 face the processors 13A and 13B.

In the third embodiment, the direction of the radio wave emitted from the antenna 11A is diagonally changed toward the upper right by the reflector 15, and the direction of the radio wave emitted from the antenna 11 B is diagonally changed toward the upper left by the reflector 15. As a result, the same communication ranges A and B as the first and second embodiments are set.

The shape of the reflector 15 is not limited to the triangular prism. For example, two reflectors each of which is supported while a surface of a metallic plate is inclined may be introduced.

In the RFID tags 1 illustrated in Figs. 2 to 4, both the communication ranges A and B can be activated. On the other hand, in configurations of the RFID tags 1 illustrated in Figs. 5 to 8, one of the communication ranges A and B is selected, and only the selected communication range is activated. A battery (not illustrated) is incorporated as a power source in the RFID tags of the embodiments of Figs. 5 to 8 in order to single-handedly switch the selection of the communication ranges.

An RFID tag 1 of a fourth embodiment of Fig. 5 includes the two antennas 11A and 11 B and a switch mechanism that switches connection between the IC chip 12 and the antennas 11A and 11 B respectively. The IC chip 12 selects one of the communication ranges A and B, and the operation of the switch mechanism 16 is controlled such that the antenna corresponding to the selected communication range is connected to the IC chip 12. When the connected antenna can receive the radio wave from the antenna unit 20 of the reader/writer 2, the communication can be conducted through the selected communication range.

In an RFID tag 1 of the fifth embodiment of Fig. 6, the two antennas 11A and 11 B and the single IC chip 12 are provided, the signal line from the IC chip 12 is connected to both the antennas 11A and 11 B through a distributor (not illustrated), and a variable phase shifter 17 is interposed between the distributor and the antenna 11A.

In the tag 1 having the above configuration, a signal having a predetermined frequency transmitted from the IC chip 12 is distributed to the antennas 11A and 11 B through the distributor 17. The variable phase shifter 17 changes a phase of the signal distributed to the antenna 11A, whereby the radio waves having phases different from each other are transmitted from the antennas 11A and 11B. A range where a composite wave of the radio waves is emitted becomes the communication range.

The direction in which the composite wave is emitted varies according to an amount of phase shift between the antennas 11A and 11 B. Therefore, in the fifth embodiment, the variable phase shifter 17 is set while an adjustment amount of the phase is switched in two ways. The composite wave of the radio waves is diagonally emitted in the upper right direction to set the communication range A when one of the adjustment amounts is set, and the composite wave of the radio waves is diagonally emitted in the upper left direction to set the communication range B when the other adjustment amount is set. Further, one of the two adjustment amounts of the phase is selected as an initial state, and the initial state is properly switched to the other adjustment amount, which allows the communication ranges A and B to be switched.

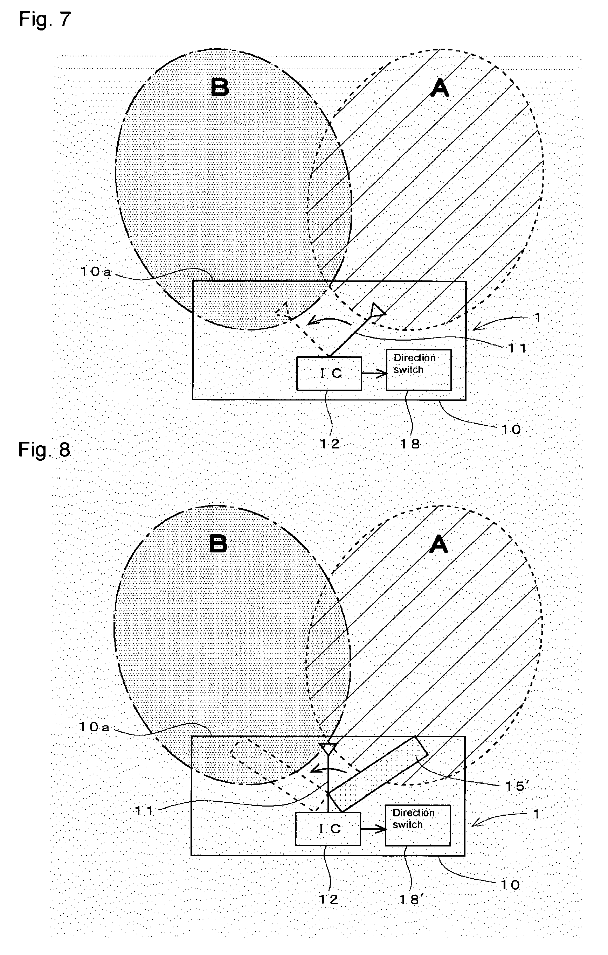

In an RFID tag 1 of a sixth embodiment of Fig. 7, one antenna 11 and one IC chip 12 are provided, and a direction switch 18 including a small-size motor is provided. Although not illustrated, a rotation shaft of the motor of the direction switch 18 is disposed while an axial direction of the motor is matched with a direction orthogonal to a paper plane of Fig. 7, and the antenna 11 is coupled to the rotating shaft with a coupling member (not illustrated) interposed therebetween. The IC chip 12 rotates the motor in normal and reverse directions within a predetermined angle range in order to horizontally swing the antenna 11, thereby changing the direction of the antenna 11. Therefore, the communication ranges A and B can properly be switched.

In an RFID tag 1 of a seventh embodiment of Fig. 8, one antenna 11 and one IC chip 12 are provided. Further, in the RFID tag 1, a direction switch 18' including a small-size motor and a plate-like reflector 15' are introduced. Similarly to the antenna 11 of the sixth embodiment of Fig. 7, the reflector 15' is coupled to the rotating shaft of the motor of the direction switch 18', and the direction of the reflector 15' is changed according to the rotation of the motor.

In the embodiment, the direction of the reflector 15' is changed by the direction switch 18', which allows the emission direction of the radio wave to be switched. Specifically, in the case that the reflector 15' is located in a posture illustrated by a solid line on the right of the antenna unit 11, the radio wave from the antenna 11 is diagonally emitted toward the upper left direction, thereby setting the communication range B. In the case that the reflector 15' is located in a posture illustrated by a broken line on the left of the antenna unit 11, the radio wave from the antenna 12 is diagonally emitted toward the upper right direction, thereby setting the communication range A.

As described above, in the embodiments of Figs. 5 to 8, one of the communication ranges A and B can be activated by switching the direction in which the radio wave is emitted.

In the fifth embodiment of Fig. 6, an arc locus is drawn in front of the package 10 by switching at least three stages of the adjustment value of the phase of the variable phase shifter 17, whereby at least three communication ranges can be set while switched. In the embodiments of Figs. 7 and 8, by controlling the rotations of the motors of the direction switches 18 and 18' in a finer unit, similarly at least three communication ranges can be set while switched. Further, in the embodiments of Figs. 2 to 5, at least three communication ranges can be set by providing at least three antennas 11.

The RFID tag 1 of each embodiment can be used while attached to the article conveyed along a predetermined direction such that the direction in which the communication ranges A and B are arranged corresponds to a conveying direction of the article.

In the RFID system in which the RFID tag 1 of each embodiment is used, each of the communication ranges A and B is managed by specific identification information. The identification information on each of the communication ranges A and B is registered as common information in the controller 21 of the reader/writer 2 and a memory of the IC chip 12 of each tag 1.

The identification information is not limited to one that directly indicates each of the communication ranges A and B. For example, in the case that the two antennas 11A and 11 B are provided in the tag 1, an identification code that is used when the IC chip 12 controls the antennas 11A and 11 B may be used as the identification information on each of the communication ranges A and B.

Similarly to the conventional art, the controller 21 of the reader/writer 2 transmits the command in order to detect the tag 1 that enters the communication range of the antenna unit 20, and conducts communication with the tag 1 that responds to the command. However, in the embodiments, one of the communication ranges A and B is selected, and the communication is conducted only through the selected communication range. The selection of the communication range is properly switched through a sequence of pieces of communication processing.

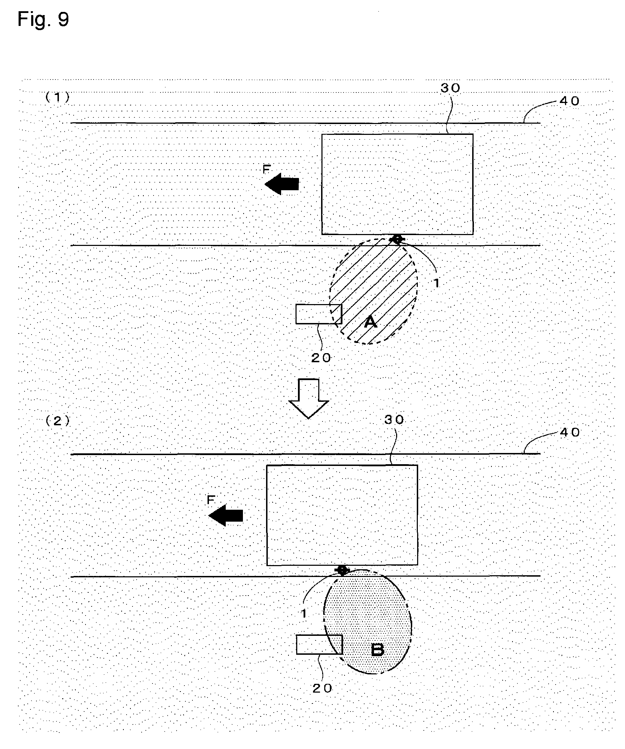

Fig. 9 is a view illustrating an example of the communication processing.

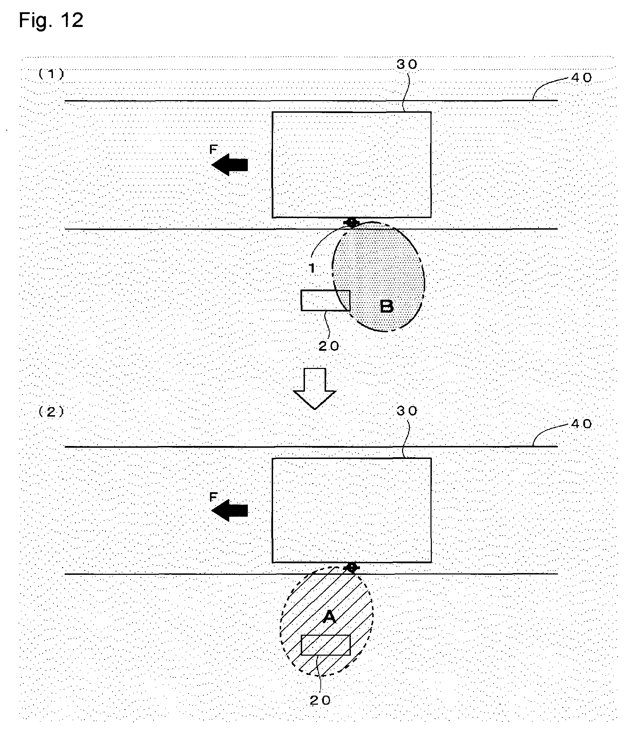

In Fig. 9, the numeral 30 designates an article to which the tag 1 is attached, and the numeral 40 designates a conveyance path of the article 30. In Fig. 9, an arrow F indicates a direction in which the article 30 is conveyed. Assuming that the direction indicated by the conveying direction F is set forward, the antenna unit 20 of the reader/writer 2 is disposed on the left of the conveyance path 40. The tag 1 is attached to the left side surface of the article according to the conveying direction F. Therefore, the communication ranges A and B of Fig. 9 becomes the state that is rotated from the states of Figs. 2 to 8 by 180° (the same holds true for Figs. 12, 15, and 16).

In the example of Fig. 9, with the movement of the tag 1 (article 30), the communication range A in the communication ranges A and B can initially conduct communication with the antenna unit 20, and then the communication range B can conduct communication with the antenna unit 20. By utilizing the principle, the controller 21 of the reader/writer 2 initially selects the communication range A and conducts communication with the tag 1 several times through the communication range A, and then the controller 21 switches the selection to the communication range B and conducts communication with the tag 1 through the communication range B.

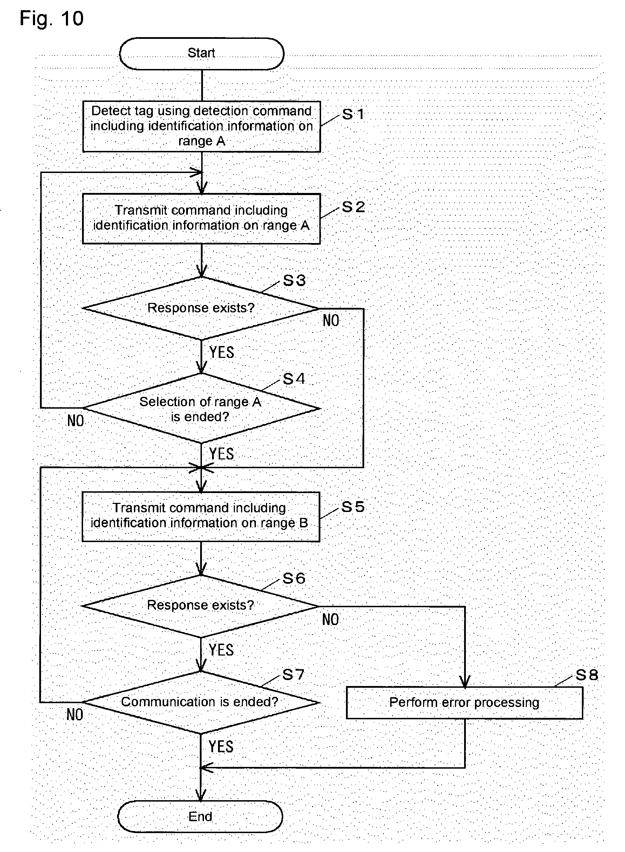

Fig. 10 is a flowchart illustrating a processing procedure performed by the controller 21 of the reader/writer 2 when the communication processing of Fig. 9 is performed. In flowcharts of Figs. 10, 11, 13, and 14, processing relating to the communication with the upper-level device 3 is omitted.

Assuming that the tag 1 of each of the embodiments illustrated in Figs. 2 to 4 is used, the communication processing of Fig. 10 will be described while relating to the processing of the tag 1.

In the embodiments, the controller 21 of the reader/writer 2 is initially set to the state in which the communication range A is selected. Based on the initial setting, the controller 21 transmits a detection command including the identification information on the communication range A (Step S1). The detection command is repeatedly transmitted until the response from the RFID tag 1 is acquired.

When the tag 1 moves to a position in which the antenna A can receives the detection command, the circuit of the IC chip 12 is started (in Figs. 2 and 4, only the IC chip 12A corresponding to the communication range A is started), and the communication can be conducted through the communication range A. The started control circuit of the IC chip 12 generates response information notifying the reader/writer 2 of the RFID tag 1 in response to the detection command from the reader/writer 2, and transmits the response information from the antenna 11A.

When the controller 21 of the reader/writer 2 receives the response information, the detection processing in Step S1 is ended and actual communication processing is started.

In this case, the controller 21 continuously transmits the command including the identification information on the communication range A in order to receive the response information from the tag 1 (Steps S2 to S4). When receiving the command through the antenna 11A, the control circuit of the IC chip 12 of the tag 1 checks that the identification information in the command is matched with the antenna 11A, and performs processing (for reading and writing information from and in the memory) according to the command. Further, the control circuit generates the response information indicating processing result, and transmits the processing result from the antenna 11A. Therefore, an affirmative determination is made in Step S3 of Fig. 10. In the case that the communication range A is selected to transmit the command, a negative determination is made in Step S4, and the flow returns to Step S2.

Similarly the transmission of the command and the reception of the response information are repeated. At this point, an upper limit is set to the number of communication times that are performed while the communication range A is selected. When the number of communication times reaches the upper limit, the controller 21 determines that the selection of the communication range A is ended. Therefore, the affirmative determination is made in Step S4, and the flow goes to Step S5.

Although not clearly illustrated in Fig. 10, in the embodiments, in the case that the response information is not acquired even if a predetermined time elapses since the command is transmitted, the same command is transmitted again. In the case that the number of retransmission times reaches a previously-set upper limit, the controller 21 determines that the RFID tag 1 does not respond. In this case, the negative determination is made in Step S3, and the flow goes to Step S5.

In Step S5, the communication range A is switched to the communication range B, and the command including the identification information on the communication range B is transmitted.

At this point, although the tag 1 possibly receives the command from the antenna A, the control circuit of the IC chip 12 does not react to the command including the identification information that does not correspond to the antenna receiving the command. However, in the case that the antennas 11A and 11 B simultaneously receive the command, the control circuit of the IC chip 12 executes the command, and transmits the response information indicating the processing result from the antenna 11 B. When the controller 21 of the reader/writer 2 receives the response information, the affirmative determination is made in Step S6.

In Step S5, the command can be retransmitted several times. Therefore, even if the antenna 11 B does not receive the command that is transmitted immediately after the selections of the communication ranges are switched, when the antenna 11 B receives the retransmitted command with the movement of the tag 1, the command can be executed and return the response information.

When receiving the response information from the tag 1, the controller 21 of the reader/writer 2 transmits the next command. The transmission of the command including the identification information on the communication range B and the reception of the response information are repeated until the transmission and reception of the necessary information are ended (a loop of Steps S5 to S7), and the processing is ended.

In the case that the response information is not acquired even if the command repeatedly retransmitted until the number of retransmission times reaches a permissible value in Step S5, the negative determination is made in Step S6, and error processing (Step S8) is performed.

After the communication range A that is initially generated by the radio wave of the antenna unit 20 is selected to start the communication, the communication processing is continued by switching the selection to the communication range B that is subsequently generated according to the movement of the tag 1, so that the range where the communication can be conducted on a movement path of the tag 1 can be expanded compared with the use of the tag in which only one communication range is generated. Accordingly, the communication can be conducted with no problem in the case that the tag 1 (article 30) moves at high speed, or in the case that the number of communication times is increased.

However, in the embodiments of Figs. 2 and 4, that is, in the case that the RFID tag 1 having the two IC chips 12A and 12B is used, because the IC chip of the write/read target is changed during the communication processing, the matching of the information between the IC chips 12A and 12B collapses to possibly generate a trouble in the processing. Accordingly, it is necessary to ensure the matching between the IC chips 12A and 12B, for example, such that the information is read from the IC chip 12A immediately before switching the selection to the communication range B, and such that the read information is written in the IC chip 12B immediately after switching the selection.

In the embodiments of Figs. 5 to 8, that is, in the case that the communication processing of Fig. 9 is performed using the RFID tag 1 that is designed to select one of the communication ranges A and B, the RFID tag1 is also initially set to the state in which the communication range A is selected. Only in the case that the identification information included in the command from the reader/writer 2 indicates the communication range currently selected by the tag 1, the control circuit of the tag 1 executes the command and returns the response information. In the case that receiving the command including the identification information on the communication range except the communication range currently selected by the RFID tag 1, instead of not executing the command, the control circuit switches the communication range selections such that the communication range corresponding to the received identification information functions. Therefore, although the controller 21 of the reader/writer 2 cannot acquire the response information with respect to the command transmission (Steps S4 and S5) immediately after switching the selection from the communication range A to the communication range B, the controller 21 retransmits the command to cause the tag 1 to execute the command, and the controller 21 can acquire the response information. The RFID tag 1 executes the command only when receiving the command through the communication range selected by the reader/writer 2, so that the read/write processing performed by the false communication can be prevented.

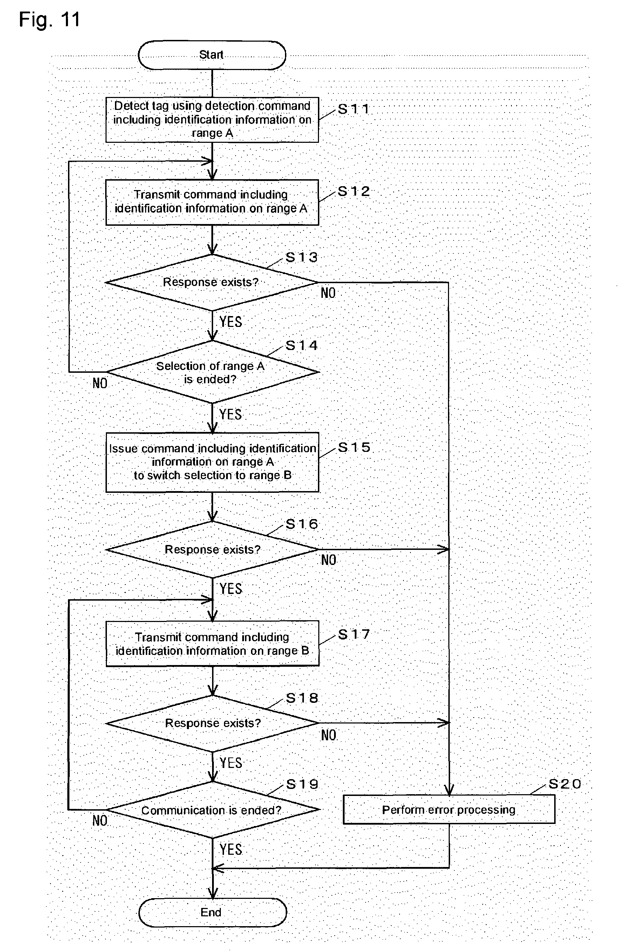

In the case that the communication processing of Fig. 9 is performed using the tags 1 of the embodiments of Figs. 5 to 8, the controller 21 of the reader/writer 2 can perform the procedure illustrated in Fig. 11.

The description will briefly be made because the basic flow of the procedure of Fig. 11 is identical to that of Fig. 10. Similarly to the example of Fig. 10, the controller 21 of the reader/writer 2 transmits the detection command including the identification information on the communication range A (Step S11). When the tag 1 can receive the detection command through the communication range A, the tag 1 returns the response information. The controller 21 that receives the response information ends the detection processing, and conducts communication with the tag 1 using the command including the identification information on the communication range A (Steps S12 to S14).

At the time the selection of the communication range A is ended, the controller 21 transmits the command to switch the selection to the communication range B as the final command including the identification information on the communication range A (Step S15). The RFID tag 1 that receives the command switches the state to the state in which the communication range B is selected, and returns the response information. When the controller 21 of the reader/writer 2 receives the response information, the affirmative determination is made in Step S16.

Then the controller 21 conducts communication with the tag 1 using the command including the identification information on the communication range B (Steps S17 and S18).

In the case that the response information cannot be received from the tag 1 with respect to the transmission of the command at each stage (in the case that a negative determination is made in any one of Steps S13, S16, and S18), the error processing (Step S20) is performed.

Fig. 12 is a view illustrating another example of the communication processing. In the example of Fig. 12, although the communication is conducted with the RFID tag 1 moving in the direction F similarly to the example of Fig. 9, not the communication range A but the communication range B is initially selected. However, the communication in which the communication range B is selected is used only in the processing for detecting the tag 1. When the detection is ended, the communication range B is quickly switched to the communication range A.

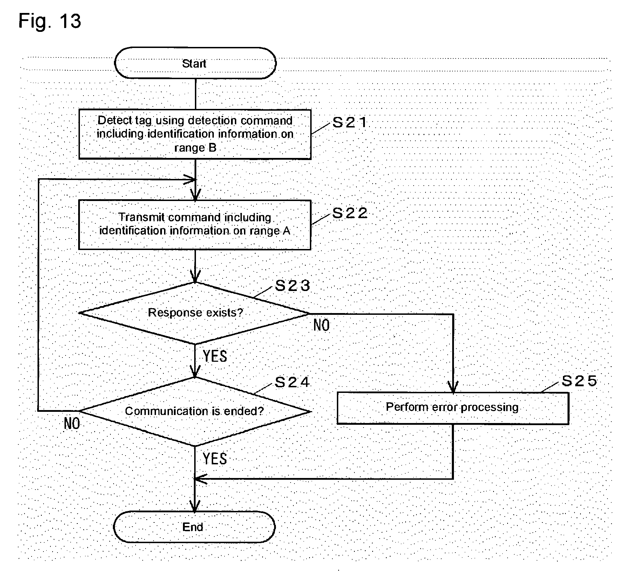

Fig. 13 illustrates the processing procedure applied to the controller 21 of the reader/writer 2 when the communication processing is performed. Only when receiving the command including the identification information on the communication range currently selected by the RFID tag 1, the RFID tag 1 to which this procedure is applied executes the command and returns the response information. Further, in the case that the RFID tags 1 of the embodiments of Figs. 5 to 8 are used, when receiving the command including the identification information on the communication range different from the communication range selected by the RFID tag 1, the RFID tag 1 switches the selection to the communication range corresponding to the identification information.

In the example of Fig. 13, the controller 21 of the reader/writer 2 performs the detection processing using the detection command including the identification information on the communication range B (Step S21). In the case that the RFID tags 1 of the embodiments of Figs. 2 to 4 are used, the tag 1 receives the command through the communication range A. However, because the identification information in the command is not matched with the communication range A, the RFID tag 1 does not respond to the detection command. The same holds true for the case that the tags 1 of the embodiments of Figs. 5 to 8 are used. In this case, desirably the tag 1 is initially set to the state in which the communication range B is selected.

In the case that the RFID tag 1 of any embodiment is used, when the RFID tag 1 moves to become the state in which the detection command is received through the communication range B, the RFID tag 1 initially reacts to the command to return the response information.

The controller 21 of the reader/writer 2 starts the actual communication in response to the response information, and the controller 21 switches the selection to the communication range A at the starting time of the actual communication and transmits the command including the identification information on the communication range A (Step S22).

In the case that the RFID tags 1 of the embodiments of Figs. 1 to 4 are used, the tag 1 receives the command through both the antennas 11A and 11 B. However, the tag 1 transmits the response information only from the antenna 11 A. When receiving the response information, the controller 21 of the reader/writer 2 transmits the next command.

The transmission of the command including the identification information on the communication range A and the reception of the response information are repeated until the communication is conducted necessary times, and then the processing is ended (Steps S22 to S24). In Step S22 of the example of Fig. 13, the same command is retransmitted in the case that the response information is not acquired with respect to the command. In the case that the number of retransmission times reaches the permissible value (a negative determination is made in Step S23), the error processing (Step S25) is performed.

In the case that the RFID tags 1 of the embodiments of Figs. 5 to 8 are used, because the tag 1 is in the state in which the communication range B is selected in order to respond to the detection command, the tag 1 does not respond to the initial command in Step S22. However, because the RFID tag 1 switches the selection to the communication range A in response to the command, the controller 21 of the reader/writer 2 retransmits the command to cause the tag 1 to execute the command, and the controller 21 can receive the response information. Therefore, the affirmative determination is made in Step S23, and the loop of Steps S22 to S24 can be repeated.

In the case that the tags 1 of the embodiments of Figs. 5 to 8 are used, the controller 21 of the reader/writer 2 may issue the command to the tag 1 to switch the communication range B to the communication range A using the command including the identification information on the communication range B after detecting the tag 1 using the detection command including the identification information on the communication range B.

In the communication processing illustrated in Figs. 12 and 13, the communication is actually conducted using only the communication range A for the purpose of the read/write processing. The communication is not quickly started even if the communication can be conducted through the communication range A, but the communication is started after a certain amount of time elapses. Therefore, the range where the communication can be conducted on the movement path of the tag 1 is narrowed compared with the case that the communication is conducted while only the communication range A is selected. Therefore, as illustrated in Fig. 12, the communication ranges A and B are adjusted such that the good relationship between the communication range A and the antenna unit 20 is acquired at the time the communication range selections are switched, so that stability of the communication can be enhanced.

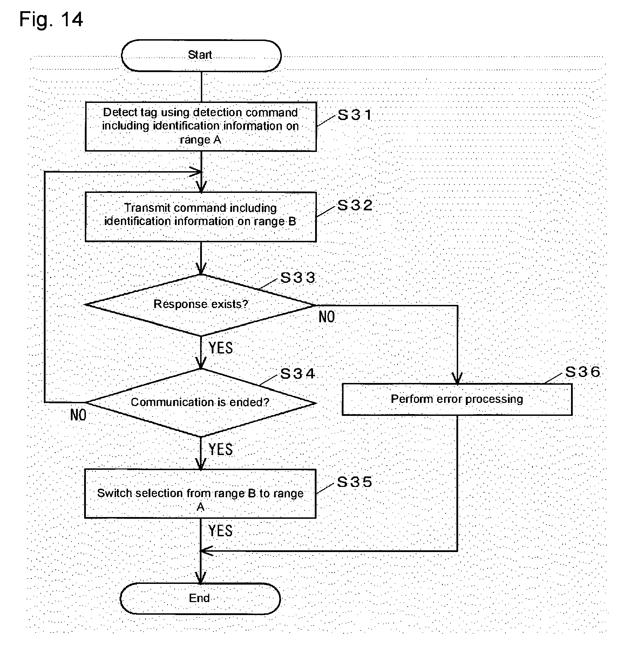

Fig. 14 illustrates the processing procedure performed by the controller 21 of the reader/writer 2 when the communication range B is utilized in the read/write processing. In the example of Fig. 14, it is assumed that the RFID tag 1 moves along the direction F illustrated in Figs. 9 and 12.

In the example of Fig. 14, the controller 21 of the reader/writer 2 performs the detection processing using the detection command including the identification information on the communication range A (Step S31). When receiving the detection command from the reader/writer 2 through the communication range A, the tag 1 returns the response information to the reader/writer 2. The controller 21 of the reader/writer 2 that receives the response information switches the selection to the communication range B, and conducts communication with the tag 1 using the command including the identification information on the communication range B (Steps S32 to S34). In the case that the controller 21 does not acquire the response information from the tag 1 even if the command is retransmitted until the number of retransmission times reaches the permissible value in the communication, the flow goes to the error processing (Step S36).

When the communication proceeds smoothly to end all the pieces of communication, the controller 21 switches the selection of the communication range from the communication range B to the communication range A (Step S35). Therefore, the controller 21 becomes the state in which the detection command including the identification information on the communication range A can be transmitted again in order to detect the subsequent tag 1.

In the case that the communication processing is performed using the RFID tags 1 of the embodiments of Figs. 5 to 8, the tag 1 is initially set to the state in which the communication range A is selected. When receiving the command including the identification information on the communication range that is not selected by the tag 1, the tag 1 does not execute the command, but switches the selection to the communication range corresponding to the received identification information.

In the case that the conventional tag having only one communication range is used, the range where the communication can actually be conducted is narrowed by the communication for the tag detecting processing. On the other hand, according to the communication processing illustrated in Fig. 12, the tag 1 is detected using the communication range A that becomes the state in which the radio wave can initially receive from the reader/writer, so that the communication range B can be used only in the actual communication processing. Therefore, the communication can be conducted well in advance in the case that the tag 1 moves at high speed, or in the case that the number of communication times is increased.

In the pieces of communication processing illustrated in Figs. 9 to 14, it is assumed that the communication range A is activated in advance of the communication range B. In the case that the RFID tag 1 moves in the opposite direction to the directions F illustrated in Figs. 9 and 12, the communication ranges A and B may reversely be selected.

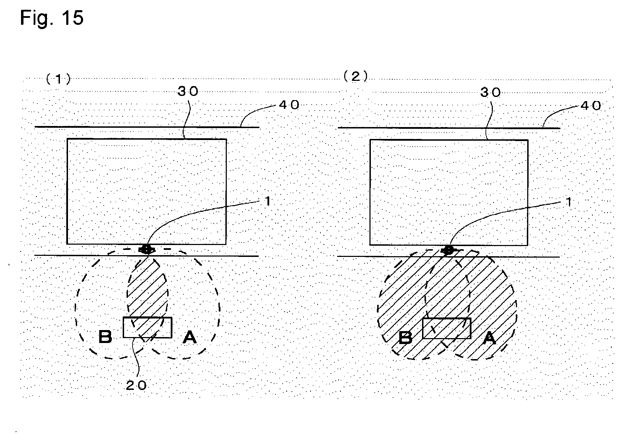

In the above examples, the reader/writer 2 selects one of the communication ranges A and B, and transmits the command including the identification information on the currently-selected communication range, thereby restricting the communication range that can be used to transmit the response information by the RFID tag 1. In the case that the RFID tag 1 (embodiments of Figs. 2 to 4) that can simultaneously generate the communication ranges A and B is used, the communication processing illustrated in Fig. 15 may be performed.

In examples of Figs. 15(1) and 15(2), the controller 21 of the reader/writer 2 transmits the command that does not include the identification information on the communication range or the command that includes both the pieces of identification information on the communication ranges A and B. The command indicates that both the communication ranges A and B are selected.

In the example of Fig. 15(1), only when receiving the command of the reader/writer 2 from both the communication ranges A and B, the RFID tag 1 executes the command and returns the response information through the communication ranges A and B. At this point, the RFID 1 includes the identification information on the corresponding range in the response information transmitted to each of the communication ranges A and B.

When receiving the response information after the command is transmitted, the controller 21 of the reader/writer 2 distinguishes the communication ranges used to transmit the response information from each other based on the identification information in the response information. The controller 21 receives the pieces of response information from both the antennas 11 A and 11 B, and deals with the received response information as the activated one on the condition that contents except the pieces of identification information in the pieces of response information are matched with each other. When the response information is received from one of the communication ranges A and B, a determination that the communication is false is made to perform the error processing.

According to the processing, because the range where the communication ranges A and B overlap each other becomes the actual communication range, the communication can be conducted only when the good positional relationship holds between the tag 1 and the antenna unit 20, so that stability of the communication can be enhanced.

In the example of Fig. 15(2), the RFID tag 1 executes the command when receiving the command from the reader/writer 2 through at least one of the antennas 11A and 11 B. From the antenna through which the command is received, the RFID tag 1 returns the response information including the identification information on the communication range corresponding to the antenna. When receiving the response information including the identification information on at least one of the currently-selected communication ranges A and B, the controller 21 of the reader/writer 2 determines that the communication is successful, and activates the response information.

According to the processing, the communication can be conducted for the purpose of the read/write processing in the whole range covering the communication ranges A and B.

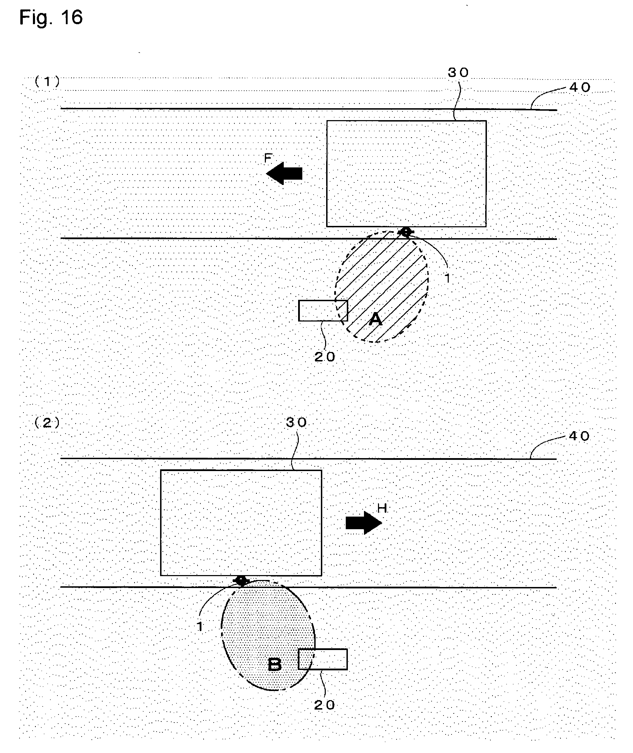

Fig. 16 illustrates an example of the communication processing when the controller 21 of the reader/writer 2 detects the direction in which the RFID tag 1 moves. In the example, the controller 21 selects both the communication ranges A and B to transmit the detection command. Similarly to the example of Fig. 15, the embodiments of Figs. 2 to 4 are applied to the RFID tag 1. When receiving the detection command through one of the communication ranges A and B, the RFID tag 1 transmits the response information including the identification information on the communication range to the communication range used in the communication. The controller 21 of the reader/writer 2 recognizes which communication range A or B the tag 1 responds through based on the identification information in the received response information, thereby determining the movement direction of the tag 1.

For example, as illustrated in Fig. 16(1), in the case that the tag 1 moves in the conveyance path 40 along the direction of the arrow F (from the right toward the left in Fig. 16(1)), because the antenna 11A initially receives the detection command, the tag 1 transmits the response information including the identification information on the communication range A. On the other hand, as illustrated in Fig. 16(2), in the case that the tag 1 moves along the direction of an arrow H (from the left toward the right in Fig. 16(2)), because the antenna 11 B initially receives the detection command, the tag 1 returns the response information including the identification information on the communication range B from the antenna 11 B.

Therefore, the controller 21 of the reader/writer 2 determines that the tag 1 moves along the direction F in the case that the initially-received response information includes the identification information on the communication range A, and the controller 21 determines that the tag 1 moves along the direction H in the case that the received response information includes the identification information on the communication range B. The determination result is transmitted to the upper-level device 3, and the determination result can be utilized in controlling an operation of another device (such as a robot that picks up the article 30).

Further, after the determination, the controller 21 of the reader/writer 2 puts the tag 1 into the state in which only the communication range of the identification information included in the response information with respect to the detection command is selected, and the controller 21 can conduct communication with the tag 1 for the purpose of the read/write processing. The controller 21 can also continue the communication with the tag 1 while switching the selection to the other communication range.

After receiving the response information, the controller 21 of the reader/writer 1 continues the transmission to the detection command to check a change of the identification information included in the response information every time, which allows a movement speed to be determined along with the movement direction of the tag.

In the above embodiments, in the case that the radio wave propagates in the wide range from the antenna unit 20, possibly both the antennas A and B of the tag 1 receives the detection command to respond immediately after the transmission of the detection command is started. Even in such cases, the movement direction of the tag 1 can be determined based on magnitude of a voltage of the received signal and the identification information.

In other words, the determination that the tag 1 moves along the direction F is made in the case that the signal including the identification information on the communication range A is larger than the signal including the identification information on the communication range B, and the determination that the tag 1 moves along the direction H is made in the case that the signal including the identification information on the communication range B is larger than the signal including the identification information on the communication range A.

The embodiments are described about the configuration and the communication processing of the RFID tag 1 in the passive RFID system. The embodiments can also be applied to semi-passive or active RFID systems.

### DESCRIPTION OF SYMBOLS

1 RFID tag, 2 reader/writer, 10 package, 10a front surface of package, 11 (11A,11B) antenna, 12 (12A,12B) IC chip, 15,15' reflector, 16 switch mechanism, 17 variable phase shifter, 18,18' direction switch, 20 antenna unit, 21 controller

## Claims

1. An RFID system including an RFID tag (1) including an antenna (11) and an IC chip (12) provided in a package (10) and a reader/writer (2) communicating with the RFID tag (1) for reading/writing information from and to a memory in said IC chip (12), **characterized in that**
said RFID tag (1) includes a function of setting a plurality of communication ranges distributed along a horizontal width direction of the package (10), and a function of, in response to receiving through a communication range a command from said reader/writer (2) that includes identification information of that communication range, returning response information corresponding to said command to the reader/writer (2);
the reader/writer (2) is configured to select one of the plurality of communication ranges, to transmit a command including the identification information of the selected communication range to the RFID tag (1) and to receive the response information in response to that command from the RFID tag (1), and
the reader/writer (2) is configured such that, when a number of communication times of sending commands and receiving responses has reached a previously set upper limit or when no response information is received from the RFID tag (1) in response to the command, the reader/writer (2) switches the selected communication range, and sends a command containing identification information of the switched communication range to the RFID tag (1).

2. The RFID system according to claim 1, wherein
said RFID tag (1) is provided with a plurality of antennas (11) adjusted to emit radio waves in directions different from each other, and the IC chip (12) includes a control circuit for operating these antennas (11) independent from each other; and
the control circuit of said IC chip (12) executes the command from said reader/writer (2) on condition that the command is received through one of said antennas (11) matching the identification information in the command, and returns response information from the antenna (11) that received the command.

3. The RFID system according to claim 1, wherein
said RFID tag (1) is adapted to select any one of said plurality of communication ranges and activate only the selected communication range; and
said reader/writer (2) transmits, when switching of communication range selection becomes necessary, a command instructing the switching to said RFID tag.

4. The RFID system according to claim 1, wherein
said RFID tag (1) is adapted to select any one of said plurality of communication ranges and activate only the selected communication range;
said RFID tag (1) is configured such that, upon receiving a command including identification information of a communication range other than the selected communication range from said reader/writer (2), said RFID tag (1) does not return the response information but switches selection to the communication range corresponding to the identification information included in the received command.

5. The RFID system according to claim 1, wherein
said RFID tag (1) is provided with a plurality of antennas (11) having radio wave emission directions adjusted such that communication ranges are distributed along one width direction of a surface to face said reader/writer (2), and an IC chip (12) including a control circuit operating these antennas (11) independent from each other;
the control circuit of said IC chip (12), receiving a command for detection from the reader/writer (2) through at least one antenna (11), transmits response information including identification information of the communication range corresponding to the antenna (11), through the (11) antenna (11) that received the command; and
said reader/writer (2) transmits said command for detection with all of said plurality of communication ranges being in the selected state, and determines direction of movement of the tag based on the identification information included in the response information corresponding to the command.

6. The RFID tag system according to claim 1, wherein
said RFID tag (1) is provided with a plurality of antennas (11) having radio wave emission directions adjusted such that communication ranges are distributed along one width direction of a surface to face said reader/writer (2), and an IC chip including a control circuit operating these antennas (11) independent from each other;
said reader/writer (2) selects at least two communication ranges arranged along the direction in which the communication ranges are distributed, and when, through at least one of the selected communication ranges, response information including identification information of the communication range is received corresponding to the transmitted command, activates the response information; and
the control circuit of said IC chip, receiving a command from the reader/writer (2) through at least one of the antennas (11) corresponding to the communication ranges selected by the reader/writer (2), executes the command, and transmits response information including identification information of the corresponding communication range, through the antenna (11) that received the command.

7. The RFID system according to claim 1, wherein
said RFID tag (1) is provided with a plurality of antennas (11) having radio wave emission directions adjusted such that communication ranges are distributed along one width direction of a surface to face said reader/writer (2), and an IC chip including a control circuit operating these antennas (11) independent from each other;
said reader/writer (2) selects at least two communication ranges arranged adjacent to each other along the direction in which the communication ranges are distributed, and when, from each of the selected communication ranges, response information including identification information of the range is received corresponding to the transmitted command and contents of these pieces of response information match, activates these pieces of response information; and
when a command from the reader/writer (2) is received from all antennas (11) corresponding to the communication ranges selected by the reader/writer (2), the control circuit of said IC chip executes the command, and transmits, through all the antennas (11) that received the command, response information including identification information of the communication range corresponding to each of the antennas (11).

## Patentansprüche

1. RFID-System, welches einen RFID-Tag (1) aufweist, der eine Antenne (11) und einen IC-Chip (12), die in einem Gehäuse (10) vorgesehen sind, und ein Lese-/Schreibgerät (2) aufweist, das mit dem RFID-Tag (1) zum Lesen/Schreiben von Informationen von und auf einem Speicher in dem IC-Chip (12) kommuniziert, **dadurch gekennzeichnet, dass**
der RFID-Tag (1) eine Funktion zum Setzen einer Mehrzahl von Kommunikationsreichweiten, die entlang einer horizontalen Breitenrichtung des Gehäuses (10) verteilt sind, und eine Funktion aufweist, in Antwort auf das Empfangen eines Befehls von dem Lese-/Schreibgerät (2)durch eine Kommunikationsreichweite, der eine Identifikationsinformation der Kommunikationsreichweite aufweist, eine Antwortinformation, die zu dem Befehl korrespondieren, an das Lese-/ Schreibgerät (2) zurückzugeben;
das Lese-/Schreibgerät (2) eingerichtet ist, eine der Mehrzahl von Kommunikationsreichweiten auszuwählen, einen Befehl, der die Identifikationsinformation der ausgewählten Kommunikationsreichweite aufweist, an den RFID-Tag (1) zu übermitteln und die Antwortinformation in Antwort auf diesen Befehl von dem RFID-Tag (1) zu empfangen, und
das Lese-/Schreibgerät (2) so eingerichtet ist, dass, wenn eine Anzahl von Kommunikationszeiten des Sendens von Befehlen und Empfangens von Antworten eine vorher gesetzte obere Grenze erreicht hat, oder wenn keine Antwortinformation von dem RFID-Tag (1) in Antwort auf den Befehl empfangen wurde, das Lese-/Schreibgerät (2) die ausgewählte Kommunikationsreichweite wechselt und einen Befehl an den RFID-Tag (1) sendet, der eine Identifikationsinformation der gewechselten Kommunikationsreichweite enthält.

2. RFID-System gemäß Anspruch 1, wobei
der RFID-Tag (1) mit einer Mehrzahl von Antennen (11) versehen ist, die angepasst sind, Funkwellen in Richtungen zu emittieren, die unterschiedlich zueinander sind, und der IC-Chip (12) eine Steuerschaltung zum Betreiben dieser Antennen (11) unabhängig voneinander aufweist; und
die Steuerschaltung des IC-Chips (12) den Befehl von dem Lese/Schreibgerät (2) unter der Bedingung ausführt, dass der Befehl durch eine der Antennen (11) empfangen wurde, die der Identifikationsinformation in dem Befehl entspricht, und die Antwortinformation von der Antenne (11) zurückgibt, die den Befehl empfangen hat.

3. RFID-System gemäß Anspruch 1, wobei
der RFID-Tag (1) angepasst ist, eine der Mehrzahl von Kommunikationsreichweiten auszuwählen und nur die ausgewählte Kommunikationsreichweite zu aktivieren; und
das Lese-/Schreibgerät (2) einen Befehl an den RFID-Tag übermittelt, der das Wechseln instruiert, wenn das Wechseln der Kommunikationsreichweiteauswahl notwendig wird.

4. RFID-System gemäß Anspruch 1, wobei
der RFID-Tag (1) angepasst ist, eine der Mehrzahl von Kommunikationsreichweiten auszuwählen und nur die ausgewählte Kommunikationsreichweite zu aktivieren;
der RFID-Tag (1) so eingerichtet ist, dass, wenn er einen Befehl von dem Lese-/Schreibgerät (2) empfängt, der eine Identifikationsinformation einer Kommunikationsreichweite enthält, die anders als die ausgewählte Kommunikationsreichweite ist, der RFID-Tag (1) nicht die Antwortinformation zurückgibt, sondern die Auswahl zu der Kommunikationsreichweite wechselt, die der Identifikationsinformation, die in dem empfangenen Befehl enthalten ist, entspricht.

5. RFID-System gemäß Anspruch 1, wobei
der RFID-Tag (1) mit einer Mehrzahl von Antennen (11), die Funkwellenemissionsrichtungen haben, die so angepasst sind, dass Kommunikationsreichweiten entlang einer Breitenrichtung einer Oberfläche verteilt sind, so dass sie dem Lese-/Schreibgerät (2) zugewandt sind, und einem IC-Chip (12) versehen ist, der eine Steuerschaltung aufweist, die diese Antennen (11) unabhängig voneinander betreibt;
die Steuerschaltung des IC-Chips (12), die einen Befehl zur Detektion von dem Lese-/Schreibgerät (12) durch zumindest eine Antenne (11) empfängt, eine Antwortinformation, die eine Identifikationsinformation der Kommunikations-reichweite aufweist, die der Antenne (11) entspricht, durch die Antenne (11), die den Befehl empfangen hat, übermittelt; und
das Lese-/Schreibgerät (12) den Befehl zur Detektion mit allen der Mehrzahl von Kommunikationsreichweiten, die in dem ausgewählten Zustand sind, übermittelt und eine Richtung der Bewegung des Tags basierend auf der Identifikationsinformation, die in der Antwortinformation enthalten ist, die dem Befehl entspricht, bestimmt.

6. RFID-Tag-System gemäß Anspruch 1, wobei
der RFID-Tag (1) mit einer Mehrzahl von Antennen (11), die Funkwellenemissionsrichtungen haben, die so angepasst sind, dass Kommunikationsreichweiten entlang einer Breitenrichtung einer Oberfläche verteilt sind, so dass sie dem Lese-/Schreibgerät (2) zugewandt sind, und einem IC-Chip versehen ist, der eine Steuerschaltung aufweist, die diese Antennen (11) unabhängig voneinander betreibt;
das Lese-/Schreibgerät (12) zumindest zwei Kommunikationsreichweiten auswählt, die entlang der Richtung angeordnet sind, in der die Kommunikationsreichweiten verteilt sind, und wenn, durch zumindest eine der ausgewählten Kommunikationsreichweiten, eine Antwortinformation, die eine Identifikationsinformation der Kommunikationsreichweite aufweist, korrespondierend zu dem übertragenen Befehl empfangen wird, die Antwortinformation aktiviert; und
die Steuerschaltung des IC-Chips, die einen Befehl von dem Lese/Schreibgerät (12) durch zumindest eine der Antennen (11), die den Kommunikationsreichweiten entsprechen, die durch das Lese-/Schreibgerät (12) ausgewählt wurden, empfängt, den Befehl ausführt und eine Antwortinformation, die eine Identifikationsinformation der entsprechenden Kommunikationsreichweite aufweist, durch die Antenne (11), die den Befehl empfangen hat, übermittelt.

7. RFID-System gemäß Anspruch 1, wobei der RFID-Tag (1) mit einer Mehrzahl von Antennen (11), die Funkwellenemissionsrichtungen haben, die so angepasst sind, dass Kommunikationsreichweiten entlang einer Breitenrichtung einer Oberfläche verteilt sind, so dass sie dem Lese-/Schreibgerät (2) zugewandt sind, und einem IC-Chip versehen ist, der eine Steuerschaltung aufweist, die diese Antennen (11) unabhängig voneinander betreibt;
das Lese-/Schreibgerät (12) zumindest zwei Kommunikationsreichweiten auswählt, die benachbart zueinander entlang der Richtung, in der die Kommunikationsreichweiten verteilt sind, angeordnet sind, und wenn, von jeder der ausgewählten Kommunikationsreichweiten, eine Antwortinformation, die eine Identifikationsinformation des Bereichs aufweist, korrespondierend zu dem übermittelten Befehl empfängt, und Inhalte dieser Stücke an Antwortinformation zusammenpassen, aktiviert diese Stücke an Antwortinformation; und
wenn ein Befehl von dem Lese-/Schreibgerät (12) von allen Antennen (11), die den Kommunikationsreichweiten entsprechen, die durch das Lese/Schreibgerät (2) ausgewählt wurden, empfangen wird, die Steuerschaltung des IC-Chips den Befehl ausführt und durch alle der Antennen (11), die den Befehl empfangen haben, eine Antwortinformation, die eine Identifikationsinformation der Kommunikationsreichweite, die zu jeder der Antennen (11) korrespondiert, aufweist, übermittelt..

## Revendications

1. Système RFID comprenant une étiquette RFID (1) comprenant une antenne (11) et une puce de circuit intégré (12) disposées dans un boîtier (10) et un dispositif de lecture/écriture (2) communiquant avec l'étiquette RFID (1) pour lire/écrire des informations dans une mémoire de ladite puce de circuit intégré (12), **caractérisé en ce que**
ladite étiquette RFID (1) comprend une fonction d'établissement d'une pluralité de plages de communication distribuées le long d'une direction de largeur horizontale du boîtier (10), et une fonction de, en réponse à la réception par le biais d'une plage de communication d'une commande à partir dudit dispositif de lecture/écriture (2) qui comprend des informations d'identification de ladite plage de communication, renvoyer des informations de réponse correspondant à ladite commande audit dispositif de lecture/écriture (2) ;
le dispositif de lecture/écriture (2) est configuré pour sélectionner l'une de la pluralité de plages de communication, pour transmettre une commande comprenant des informations d'identification de la plage de communication sélectionnée à l'étiquette RFID (1) et recevoir les informations de réponse en réponse à cette commande à partir de l'étiquette RFID (1), et
le dispositif de lecture/écriture (2) est configuré de telle sorte que, lorsqu'un certain nombre de communications où des commandes sont envoyées et des réponses sont reçues atteint une limite supérieure préalablement définie, ou lorsqu'aucune information de réponse n'est reçue par l'étiquette RFID (1) en réponse à la commande, le dispositif de lecture/écriture (2) modifie la plage de communication sélectionnée, et envoie une commande contenant des informations d'identification de la plage de communication modifiée à l'étiquette RFID (1).

2. Système RFID selon la revendication 1, dans lequel ladite étiquette RFID (1) est pourvue d'une pluralité d'antennes (11) réglées pour émettre des ondes radio dans des directions différentes les unes des autres, et la puce de circuit intégré (12) comprend un circuit de commande pour faire fonctionner ces antennes (11) indépendamment les unes des autres, et
le circuit de commande de ladite puce à circuit intégré (12) exécute la commande à partir dudit dispositif de lecture/écriture (2) à condition que la commande soit reçue par l'intermédiaire de l'une desdites antennes (11) correspondant aux informations d'identification dans la commande, et renvoie des informations de réponse à partir de l'antenne (11) qui a reçu la commande.

3. Système RFID selon la revendication 1, dans lequel
ladite étiquette RFID (1) est conçue pour sélectionner l'une quelconque de ladite pluralité de plages de communication et activer uniquement la plage de communication sélectionnée ; et
ledit dispositif de lecture/écriture (2) transmet, lorsque la modification de la sélection de la plage de communication devient nécessaire, une commande demandant la modification à ladite étiquette RFID.

4. Système RFID selon la revendication 1, dans lequel
ladite étiquette RFID (1) est conçue pour sélectionner l'une quelconque de ladite pluralité de plages de communication et activer uniquement la plage de communication sélectionnée ;
ladite étiquette RFID (1) est configurée de telle sorte que, lors de la réception d'une commande comprenant des informations d'identification d'une plage de communication autre que la plage de communication sélectionnée à partir dudit dispositif de lecture/écriture (2), ladite étiquette RFID (1) ne renvoie pas les informations de réponse, mais modifie la sélection en faveur de la plage de communication correspondant aux informations d'identification incluses dans la commande reçue.

5. Système RFID selon la revendication 1, dans lequel
ladite étiquette RFID (1) est pourvue d'une pluralité d'antennes (11) ayant des directions d'émission d'ondes radio réglées de telle sorte que les plages de communication sont distribuées le long d'une direction de largeur d'une surface pour faire face audit dispositif de lecture/écriture (2), et d'une puce à circuit intégré (12) comprenant un circuit de commande faisant fonctionner lesdites antennes (11) indépendamment les unes des autre
le circuit de commande de ladite puce à circuit intégré (12), recevant une commande de détection à partir du dispositif de lecture/écriture (2) par l'intermédiaire d'au moins une antenne (11), transmet des informations de réponse comprenant des informations d'identification de la plage de communication correspondant à l'antenne (11), par l'intermédiaire de l'antenne (11) qui a reçu la commande ; et
ledit dispositif de lecture/écriture (2) transmet ladite commande de détection avec l'ensemble de ladite pluralité de plages communication dans l'état sélectionné, et détermine la direction du mouvement de l'étiquette sur la base des informations d'identification incluses dans les informations de réponse correspondant à la commande.

6. Système d'étiquette RFID selon la revendication 1, dans lequel
ladite étiquette RFID (1) est pourvue d'une pluralité d'antennes (11) ayant des directions d'émission d'ondes radio réglées de telle sorte que les plages de communication sont distribuées le long d'une direction de largeur d'une surface pour faire face audit dispositif de lecture/écriture (2), et d'une puce à circuit intégré comprenant un circuit de commande faisant fonctionner lesdites antennes (11) indépendamment les unes des autres ;
ledit dispositif de lecture/écriture (2) sélectionne au moins deux plages de communication agencées le long de la direction dans laquelle les plages de communication sont distribuées, et, lorsque par l'intermédiaire d'au moins l'une des plages de communication sélectionnées, des informations de réponse comprenant des informations d'identification de la plage de communication, sont reçues correspondant à la commande transmise, active les informations de réponse ; et
le circuit de commande de ladite puce à circuit intégré, recevant une commande à partir du dispositif de lecture/écriture (2) par l'intermédiaire d'au moins l'une des antennes (11) correspondant aux plages de communication sélectionnées par le dispositif de lecture/écriture (2), exécute la commande, et transmet des informations de réponse comprenant des informations d'identification de la plage de communication correspondante par l'intermédiaire de l'antenne (11) qui a reçu la commande.

7. Système RFID selon la revendication 1, dans lequel
ladite étiquette RFID (1) est pourvue d'une pluralité d'antennes (11) ayant des directions d'émission d'ondes radio réglées de telle sorte que les plages de communication sont distribuées le long d'une direction de largeur d'une surface pour faire face audit dispositif de lecture/écriture (2), et d'une puce à circuit intégré comprenant un circuit de commande faisant fonctionner lesdites antennes (11) indépendamment les unes des autres ;
ledit dispositif de lecture/écriture (2) sélectionne au moins deux plages de communication agencées adjacentes l'une à l'autre le long de la direction dans laquelle les plages de communication sont distribuées, et, lorsqu'à partir de chacune des plages de communication sélectionnées, des informations de réponse comprenant des informations d'identification de la plage sont reçues correspondant à la commande transmise et que les contenus de ces éléments d'information de réponse transmis correspondent, active ces éléments d'information de réponse ; et
lorsqu'une commande du dispositif de lecture/écriture (2) est reçue à partir de toutes les antennes (11) correspondant aux plages de communication sélectionnées par le dispositif de lecture/écriture (2), le circuit de commande de ladite puce de circuit intégré exécute la commande, et transmet, par l'intermédiaire de toutes les antennes (11) qui ont reçu la commande, des informations de réponse comprenant des informations d'identification de la plage de communication correspondant à chacune des antennes (11).
